# EUROPEAN PATENT SPECIFICATION

(11) **EP 3 169 268 B1**
(45) Date of publication and mention of the grant of the patent: **23.12.2020**
(21) Application number: 15766254.5
(22) Date of filing: 15.07.2015
(51) Int. Cl.: A61C 8/02, A61C 8/00

(54) **DENTAL RING**
ZAHNÄRZTLICHER RING
BAGUE DENTAIRE

(30) Priority: 15.07.2014 PL 40885914; 05.12.2014 IT MI20142097
(43) Date of publication of application: 24.05.2017
(73) Proprietor: Warszawski Uniwersytet Medyczny, 02-091 Warszawa (PL)
(72) Inventor: WYCHOWANSKI, Piotr, 02-781 Warszawa (PL); CHRÓSCICKA, Anna, 02-656 Warszawa (PL); LEWANDOWSKA-SZUMIEL, Malgorzata, 03-980 Warszawa (PL); KALASZCZYNSKA, Ilona, 02-795 Warszawa (PL)
(74) Representative: Witek, Rafal
(86) International application number: PCT/IB2015/055363
(87) International publication number: WO 2016/009372

(56) References cited:
- EP-A2- 1 508 311
- WO-A1-2014/040654
- DE-A1-102011 016 279
- US-A1- 2002 022 885

## Description

The invention relates to dental rings for a regeneration of bone surface and reconstruction of bone tissue in vertical dimension.

### State of art

Reconstruction of bone loss with an autogenic bone graft is nowadays considered as a golden mean among procedures for hard bones regeneration in maxillofacial and dental surgery.
Bone material is derived from the donor area in the form of bone chips obtained with bone scrapers most often from jaw nodule or retromolar gap or from larger bone fragments grinded in mills. Next, bone material is transferred and condensed in an acceptor area and fixed/immobilized with covering collagen film or polytetrafluoroethylene film (PTFE film) together with pins.
Autogenic bone engraft is also conducted in a form of bone blocks. Such blocks are fixed by bone loss impaction or are stabilized by pins and/or resorbable or non-resorbable screws. The latter ones require to be removed after graft engraftment period.
A method for simultaneous introduction of dental implants passing centrally through autogenic bone graft obtained from chin area and shaped in a form of ring is known. The method, due to limitations of the donor area, is limited to a maximum of four grafts. In case of a successful graft healing, the dental implant remains in the site of insertion and constitutes a foundation for prosthetic reconstruction.
Bone losses are also filled with allogenic, xenogenic or heterogenic material. An application of such methods of regeneration is analogous in its form to the methods of autogenic graft. Lack of available data regarding the method of simultaneous introduction of the dental graft together with bone replacing block in such a manner that the block is simultaneously a dental implant is an only exception. Materials for bone replacement and regeneration that are shaped such that they enable simultaneous introduction and fixation within an acceptor site by dental implant are not available on the market as well.
Specifically, blocks prepared from bone replacement material shaped in the form of a ring are not available. Furthermore, such formed three-dimensional scaffolds seeded with osteogenic cells have not been reported.

A golden mean in the field of regeneration of vertical and horizontal bone losses is a use of autogenic bone grafts. Such technique assumes deriving a bone from donor sites of the same patient whose bone surface is being reconstructed. A bone can be obtained from a donor site in a form of bone chips with scrapers. Such a form requires in an acceptor site a specific material shaping and its consolidation by means of resorbable and non-resorbable barrier films. Bone tissue can be derived also in the form of blocks excised with trepans, chisels, rotary drills and piezoelectric-type devices. Thus, obtained are shaped bone fragments that are then fixed to the bone loss with pins or screws. After successful reconstruction bone material is integrated with acceptor surface and elements fixing graft can be removed. In implantation a procedure for stabilizing elements removal is usually employed also to introduce dental grafts utilizing newly formed bone tissue for stabilization. After the period of implant healing they can be subjected to prosthetic reconstruction.

An essential modification of the described solution is to use grafts of bone tissue shaped at a donor site in the form of a ring. Such a ring is excised with two round trepans having various diameters, attached to a surgical drill. Both trepans are characterized in this procedure by the same central pivot point. The diameter of the smaller trepan is equal or a part of a millimeter smaller than the outer diameter of the dental implant that is supposed to be implanted in an acceptor site. The diameter of the larger trepan is about 2 millimeters larger than the outer diameter of the smaller trepan defining thereby the thickness of the bone ring. The height of the ring depends on the vertical size of the bone tissue defect being regenerated and it is supposed to be equal. Such an obtained ring is transferred into the acceptor site and fixed with a simultaneously installed dental implant. This implant is introduced through the middle part of the ring and its end is fixed in the previously prepared surface within the area of the acceptor site. Such a procedure ensures the primary stabilization of the implant as well as the fixation of the engrafted bone block that has been previously shaped in the form of a ring. EP1508311 discloses a dental ring for a regeneration of a bone surface and a reconstruction of a bone tissue in vertical dimension according to the preamble of claim 1.

### Technical problem

An advantage of bone rings technique introduction is a reduction of a whole bone regeneration and dental implants transplantation procedure to one surgery. However, the use of bone rings did not eliminate basic problems regarding autogenic bones grafts comprising:
a) necessity to perform a traumatic surgery in a donor site (most often mandible, but other bones are also employed);
b) limited amount of the material available for excision in a donor site - in some cases insufficient for a complete complement of the loss in an acceptor site (mandible bone usually ensures material for no more than 4 excisions of bone material for transplantation);
c) significant amount of a cortical bone fraction which is depleted of cells and growth factors in respect to the poor content of cancellous bone in a transplanted material;
d) non-standardized quality of the transplanted material depending on a donor body system as well as an anatomical site from which the material is derived;
e) uncertain time of transplant resorption, usually too rapid in regard to clinical needs that results in rapid loss of a horizontal and vertical dimension of the bone surrounding transplanted implants, their exposure, infection and following premature loss.
One known attempt to resolve the aforementioned problems is to employ rings made of cancellous allogenic bone. However, it does not allow to overcome all of the aforementioned problems from c) to e). Despite cancellous structure, allogenic bone utilized to form rings is deprived of living cells and active growth factors. Additionally, performing a graft derived from a foreign donor involves additional problems, for example, may cause the risk of an infectious disease transmission.
Another technical problem requiring a solution is obtaining a better reconstruction of an acceptor bone, especially in the vertical dimension. Regeneration of polyhedral bone losses is a major problem in dental and maxillofacial surgery. In case of arrangements for a transplantation of dental implants, numerous surgical techniques are focused especially on the increase of the vertical bone dimension of an alveolar bone of mandible or alveolar process of maxilla. Autogenic bone transplantations or procedures for a controlled bone regeneration utilizing xenogenic bone do not ensure repetitive favorable results. Usually in the literature, the efficacy of those techniques during regeneration of 4 mm bone loss is estimated as below 50%. Such techniques disable a simultaneous introduction of dental implants, thereby, force a patient to be subjected to surgical procedures at least twice in order to restore toothing.

Another major problem with the controlled bone regeneration, particularly with the reconstruction of maxillary bone within the alveolus to enable dental implant transplantation, is soft tissues control. Soft tissues of the gum must cover newly formed bone volume, obtained as a result of regeneration procedure. The amount of soft tissue in the site of bone defect is insufficient and the full coverage of the reconstructed bone tissue is problematic. Formed and prepared lobes as well as grafts of soft tissues usually are insufficient to ensure a full coverage of the enlarged size of a bone surface. A necessity to sew tissues under tension often causes lack of tightness in the place of a stitch. The extension of utilized lobes and their distant displacement often result in significant hemodynamic disruptions within the lobe, decreasing its biological potential for healing. The aforementioned two factors often result in the dehiscence of wound edges and the exposure of the bone material. Such complication is the frequent cause of a failure of a dental implant engraftment procedure or the incidence of serious complications, such as mandible bone exposure after implant engraftment.
Another technical problem in a vertical bone loss augmentation with bone blocks, especially within an alveolus, is their premature resorption. The first clinical symptom of a transplanted bone tissue volume decrease is observed a few weeks after the procedure. Firstly, coving of the edge of engrafted bone block occurs and then its vertical and horizontal dimension is decreased. In extreme cases, it may even lead to almost full disappearance of an autograft. It leads to an exposure of titanium implants immersed in it, loss of aesthetics, function and even infection of the tissues and loss of the graft.
The solution for the aforementioned problems is provided by the present invention.

### Subject matter of the invention

A subject matter of the invention is a ring and a kit comprising thereof as defined by the appended claims. As "cytocompatible material", especially in regard to osteogenic cells, according to the present invention any material is meant that simultaneously meets the criteria as listed below:
a) viability of cells cultured directly on the surface of the material is at least 70% when compared to the result obtained in the same experimental conditions in a culture of identical cells grown on a surface of a control material;
b) all cells that adhered to the surface, 24 h after seeding are flattened and fibrous in shape (i.e. their morphology is typical for osteogenic cells);
c) cells adhesion to the material occurs within first 3 to 5 h after seeding;
d) cells proliferation rate is 25 to 30 h in standard culture conditions.
Characteristics of a material being suitable for providing the ring according to the invention are determined in the introduction to example 6.

### Unexpected technical effect

Surprisingly, the present invention provided a solution for the technical problems stated above.

The use of rings from the materials prepared by a human, seeded or non-seeded with recipients cells significantly decrease a trauma associated with an implantation procedure. In such cases, repetitive reconstruction up to 5 mm in vertical dimension of bone tissue is achieved.

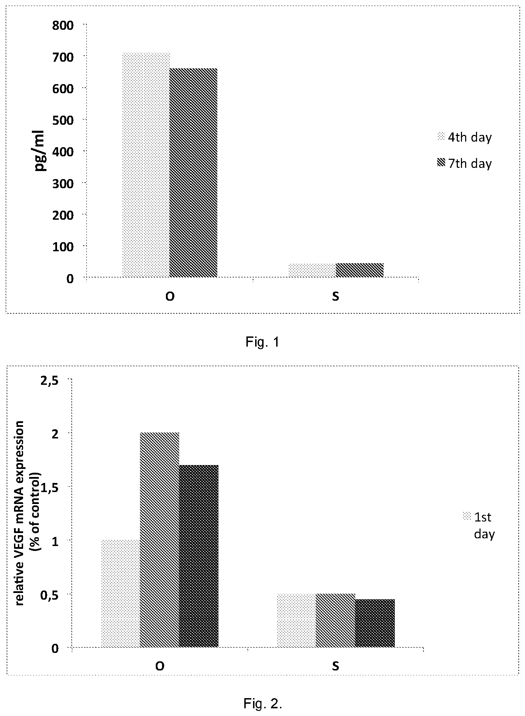

In a particular embodiment concerning an application of the ring according to the invention seeded with viable osteogenic cells of the recipient, a significant improvement in soft tissues condition was achieved manifested, in particular, in accelerated healing and increased biological potential of the tissue lobes. Due to VEGF expression in the osteogenic cells within a ring according to the invention, a blood supply in an acceptor site i.e. in the site of implantation is stimulated due to the activity of transplanted cells. This, in return, will result in a better regeneration of soft tissues that was impossible to achieve with the present methods of medical treatment. Such an effect is presented in Fig. 1 and Fig. 2.

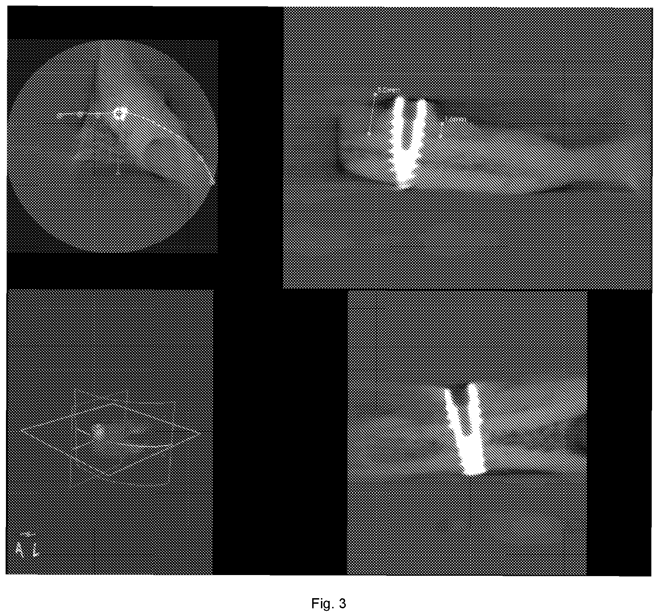

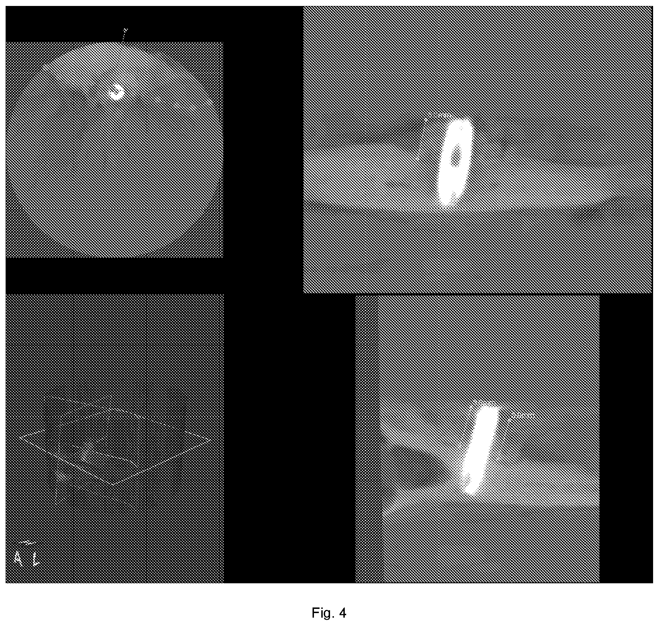

A significant advantage provided by the employment of the present invention is the ability to influence the time of transplanted osteogenic material resorption, which in case of autogenic bone grafts is entirely out of control. The invention, when used, provides a solution to such a problem. The ring according to the invention is characterized by the prolonged time of the resorption. This effect is presented in Fig. 3 and Fig. 4. Furthermore, in particular embodiments, the composition of the material that a carrier is formed from can be adjusted in such a way that the time of the resorption after engraftment into to the host body, depending on the biological needs of an acceptor site as well as expected clinical outcome can be intentionally controlled.

### Detailed description of the invention

The subject matter of the invention is related to the application of a specifically shaped three-dimensional biomaterials produced by a human- synthetic or of natural origin, seeded or non-seeded with cells in the reconstruction of arising bone losses or in a production of a bone in the site of a deficiency of bone amount in the body system of a recipient.

Scaffolds, according to the invention, made therefrom are shaped in the form of a ring. It is acceptable to form a scaffold of any other geometrical shape depending on clinical needs according to principals described in the present invention hereinafter.
The height of the ring depends on the expected quantitative effect of the reconstructed or generated bone and remains in the range of 3 mm to 6 mm. In certain cases, it is acceptable to produce the ring of a different required height with respect to the biological potential of an acceptor site.
In the central part of a ring there is an aperture that enables the insertion of a dental implant through it. A non-centrally created aperture for the implant insertion is also acceptable. Therefore, the aperture diameter ranges depending on the diameter of the used dental implant, and is equal or slightly smaller to provide an adequate implant stabilization within a ring. The adjustment of the ratio of a diameter of aperture in a ring to implant diameter eventually depends on the flexibility of the material the ring is formed from, in order to prevent its cracking.
The thickness of the ring is the greater the more aggressive dental implant screw is used to fix a ring (it is acceptable to employ smooth implant without a thread) and the larger the extent of bone regeneration or forming is planned. A regenerative potential of the acceptor site as well as mimetic properties of a material used to produce a ring remain the limitation for ring thickness extension. Minimal possible thickness of a ring to apply finally depends on the biomechanical properties of the material used to produce a ring.

The ring according to the invention is stably fixed to atrophied bone surface with dental implants inserted through the developed aperture within a ring.
A methodology comprises a surgical access to the surface of a reconstructed or built up bone obtained in the manner typical for an anatomical site. After the periosteum detachment, bedding development for a planned dental transplantation is performed according to all principals mandatory for dental implantation with the exception for the depth of bedding development. Such depth should remain smaller than the length of the planned implant. Depth difference of the bedding developed for an implant and the length of an implant is even to the height of the ring utilized in the procedure. It is acceptable to use rings that are higher as well as lower than a difference between an implant length and a depth of a developed bone bedding retaining the stability of the whole system.
Bone bedding may comprise a compact bone as well as a cancellous bone or only one of those tissue forms.
After bedding development, the previously prepared ring is attached in such a way that the aperture prepared within it and the central part of the developed bedding overlap. Then, through the ring fixed by an operator the dental implant is introduced so as its lower part is placed in the prepared bone bedding of the acceptor site achieving desired depth and stability. It is acceptable to modify the sequence of the insertion of the system components.
After inserting, the dental implant should be blinded by a scarring ring, healing ring or other conventional element. Then, the wound is closed in layers, tightly, according to the principals mandatory in the art of the surgical field. Single layer sewing is acceptable.

The area treated in such a manner is allowed to heal. Healing time depends on the characteristics of the material the ring is made of and biological ability of the recipient body system. Usually, this time is between 6 to 9 months. It is acceptable to shorten or extend the time of healing in justified cases. After the time of healing, the dental implant can be exposed. Then, it can be utilized to form a prosthetic superstructure or as another retention element. In justified cases, an immediate loading of an implant inserted by the described method or its open healing are both acceptable.

The innovation of the described methodology provides simultaneous insertion of a dental implant together with the three-dimensional scaffold fixed by it, namely, a ring according to the invention. For the time being, the transplanted three-dimensional scaffolds have been fixed by means of impaction, by pins or fixing screws, sewed or immobilized by various types of tissue adhesives. However, dental grafts inserted through a developed compatible aperture within a scaffold have not been employed. The application of such a method in selected cases may spare a patient additional surgery planned to remove retention elements for previously applied scaffolds as well as to engraft dental implants after recipient's tissues overgrew scaffolds.
The similar solution of fixing transplantable dental material with implants was described only for engrafts of autogenic bone. In this method, rings of autogenic bone were obtained from genial fragment of the mandible. The proposed method, according to the invention, for a ring formation assumes applying other than autogenic transplantable materials. This significantly reduces the trauma of a patient, who avoids a surgery in a donor site. Furthermore, in the method described in the present application there are no quantitative limitations, except for biological potential of an acceptor site, which in case of techniques applying autogenic bone, remains of a significant difference due to limitations of a donor site.
For a better understanding of the subject matter the present invention is supplemented with a detailed description of the exemplary embodiments comprising also appended sequencing listing and figures in which:
- Fig 1.: VEGF release by human osteogenic cells in culture (O) - values evaluated by means of ELISA assay in days 1 and 4 of a cell culture. For a comparison, analogous values obtained in human endothelium cells culture (S) carried out in identical conditions are shown.
- Fig 2.: VEGF mRNA expression in human osteogenic cells (O) in days 1, 4, and 7 of a cell culture determined by means of a real time PCR technique. GAPDH was used as a reference gene; results were normalized to the value obtained for osteogenic cell culture in day 1. For a comparison, analogous values obtained in human endothelium cells culture (S) carried out in identical conditions are shown.
- Fig 3.: shows the results of a computed tomography performed for a control sample excised from an experimental animal. A sample is a ring prepared from an autogenic bone that was introduced into an acceptor site (in mandible) and stabilized by conical titanium implant. Observations were conducted for 6 weeks.
- Fig 4.: shows the results of a computed tomography performed for a ring prepared according to the invention and excised from an experimental animal after 6 weeks of implantation. A ring prepared according to the description in example 1 was introduced into an acceptor site (in mandible) and stabilized by a conical titanium implant.

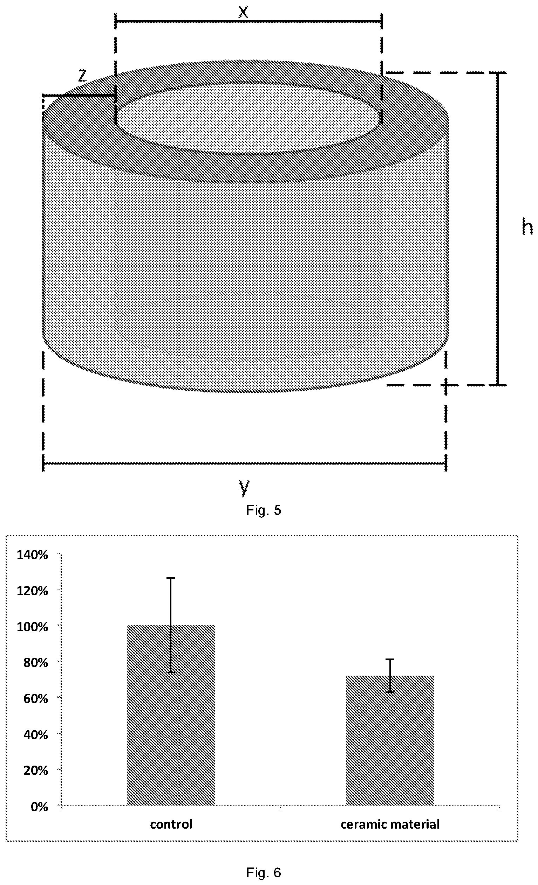

- Fig 5.: shows an outline of a ring according to the invention where : x- internal diameter of a ring, y-outer diameter of a ring, z- ring wall thickness, h- height of a ring.
- Fig 6.: shows the result of a XTT test performed after 7 days of cells culture carried out on scaffolds prepared from Maxresorb® material. The results are expressed as a mean value for 6 measurements, as a percent of a control (value normalized to the result obtained in a control population i.e. cells cultured on a standard culture medium- expressed as %).
- Fig 7.: shows living cells (stained with green dye fluorescein) seeded and cultured for 7 days in *in vitro* conditions on a scaffold made of Maxresorb® material. Fluorescence corresponds to the presence of living cells on the material.
- Fig 8.: shows a picture of a histological slide taken after the decalcification of the sample and titanium implant removal. Paraffin embedded specimen was prepared by sectioning parallel to the long axis of titanium implant. Hematoxylin/ eosin stained specimens depict a whole cross-section of a ceramic scaffold together with recipient's tissue surrounding the ring. The figure was prepared by an automatic assembling of the photographs taken with a 4X lens. It is shown in the picture that the shape of an engrafted scaffold was retained, no signs of resorption are apparent.
- Fig 9.: shows a picture of a histological slide taken after the decalcification of the sample and titanium implant removal. Paraffin embedded specimen was prepared by sectioning parallel to the long axis of titanium implant. Hematoxylin/ eosin stained specimen depicts that all pores of the engrafted ring prepared according to the invention are filled with the connective tissue and bone tissue.
- Fig 10.: shows a picture of a histological slide taken after the decalcification of the sample and titanium implant removal. Paraffin embedded specimen was prepared by sectioning vertical to the long axis of titanium implant. Hematoxylin/ eosin stained specimen depicts that all pores of the engrafted ring prepared according to the invention are filled with the connective tissue and bone tissue and a very good integration of this ring with the recipient's tissue.
- Fig 11.: shows a picture of a histological slide taken after the decalcification of the sample and titanium implant removal. The picture of a specimen stained with hematoxylin/ eosin taken with a large magnification depicts even filling of scaffold pores with a new recipients tissue, penetration of a tissue through individual pores of a scaffold, which confirms the optimal size of the connections between pores.
- Fig 12.: shows a picture of a histological slide taken after the decalcification. A specimen stained with Goldner- Mason trichrome stain. In the picture, vascularization created between fragments of new bone tissue created inside the pores of the material a ring according to the invention is prepared from is shown (example 1).
- Fig 13.: shows results of the XTT test performed in the various time points of a cell culture carried out in calcite medium.
- Fig 14.: shows cellular nuclei stained with Hoechst stain. A picture confirms an even distribution of cells on a porous calcite base.
- Fig 15.: shows cells seeded on a calcite scaffold and cultured for 7 days. Living cells are stained in green (phalloidin staining), dead cells are stained in red (propidium iodide staining).
- Fig 16.: shows a ring formed from CaCO₃ twisted on a dental titanium implant.
- Fig 17.: shows rings made of chitosan (A) the lack of porosity is seen on the picture; (B) a titanium implant screwed into chitosan ring.
- Fig 18.: shows porosity of the rings made of chitosan and modified chitosan rings.
- Fig 19.: shows internal design of chitosan rings (A) and modified rings (B,C).
- Fig 20.: shows rings made of modified PLLA: a) initial sample, b) c) d)- rings after culturing in subsequent time points.

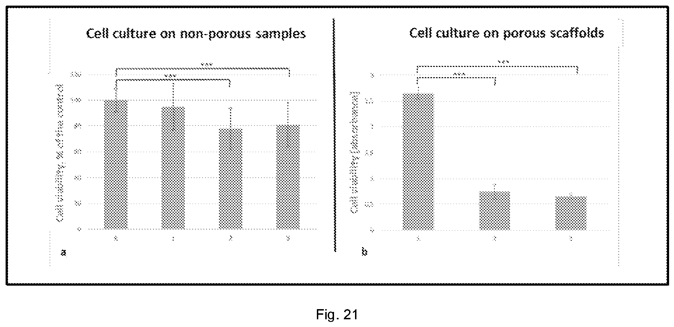

- Fig 21.: shows viability of osteogenic cells on the surface of ceramic materials with different phase composition in a culture on flat samples on the 3^{rd} day of the culture (a) and in three-dimensional porous samples (structure analogous to a ring) in the 3^{rd} week of the culture (b). The material symbols have the following meaning: K- control i.e. standard culture surface in a form of polystyrene culture plates, 1- two- phase ceramic material comprising 60% of hydroxyapatite (phase composition as in Maxresorb® material), 2- two- phase ceramic material comprising >99% of hydroxyapatite, 3- two- phase ceramic material comprising < 18% of hydroxyapatite. When cells survival in a flat culture remains on the level that is not lower than in the control, a survival of cells cultured in a three-dimensional structure analogous to the ring is high - material "1". When survival in a flat culture remains on the level that is statistically significantly lower than in the control (***- P <0,001), cells survive in a three-dimensional structure analogous to the ring to a very low extent. As an effect, materials "2" and "3" turned out to be a culture surface that was not suitable enough for a culture of osteogenic cells and did not provide suitable survival of those cells in a three-dimensional structure of a ring.

### Example 1. A ring prepared from 60% of hydroxyapatite (HA) and 40% of beta tricalcium phosphate (β-TCP) (dry ring)

Commercially available synthetic ceramic material in a form of porous blocks is shaped to a form of a ring of a desired shape:
Sequence of the procedure steps:
1. from an available block with dimensions of 20x10x10 mm made of maxresorb® material three blocks with dimensions of 10x10x5 mm are formed; from each of them cylinders with a height of 5 mm and diameter of 10 mm are developed using piezosurgery Surgysonic II manufactured by Esacromdevice and equipped with ES 002 diamond drill bit with a diameter of 150 microns and a power of 25 W and vibration amplitude of 160 microns;
2. in the prepared cylinder an internal aperture with the diameter of 3,2 mm is extracted using piezosurgery Surgysonic II manufactured by Esacromdevice equiped with ES 002 diamond drill bit with a diameter of 150 microns and a power of 20 W and vibration amplitude of 100 microns;
3. a shaped ring is packed and sterilized by means of radiation of 25 kGy.
4. a sterile ring is ready for an implantation into acceptor site and fixation with a dental implant.
In order to prepare rings commercial material available under the trademark of Maxresorb® was used. It is a synthetic material with a controlled resorption. Material consists of 60% of hydroxyapatite (HA) and 40% of beta tricalcium phosphate (β-TCP) (dry ring) It was prepared on the matrix of pores connected to each other that form material with a porosity of about 80% and pores with a size of from 200 to 800 µm.

### Example 2. A ring saturated with cell culture medium (wet ring)

Commercially available on the market synthetic ceramic material in a form of porous blocks is specifically shaped to the form of a ring with the desired dimensional shape (outer diameter - 10 mm, internal diameter - 3,2 mm, height - 5 mm). The prepared ring is sterilized by means of radiation in a dose of 25 kGy - ring preparation according to the description in example 1.

The sterile ring is placed in a culture medium and using vacuum pump vented under vacuum. To vent a ring a pressure of about 0,5 to 0,6 Bar was applied.

While the ring is being vented, a standard medium for cell culture is transferred into its pores. Culture medium composition: DMEM medium (Life Technologies) enriched with an inactivated fetal bovine serum (FBS) in a concentration of 10%, supplemented with antibiotic in a form of an Antibiotic-Antimycotic preparation (product of Life Technologies, containing 10000 units of penicillin- in a form of sodium salt, i.e. penicillin G, 10,000 µg streptomycin- in a form of streptomycin sulphate), L-glutamine in a concentration of 2 mM (Life Technologies). After venting, rings are individually transferred into wells of 24- well plate (the diameter of a well is 15 mm) and from 1,5 ml to 2 ml of culture medium of a composition as described above is added. All the procedure steps are carried out in a laminar flow cabinet ensuring aseptic working conditions and samples remain in the culture medium for a period of time from 12 do 24 hours in order to wash out residual material created while material was developed technologically, if needed. After that time, the ring is being washed at least 3x for 5 min in a culture medium without FBS. Such prepared sterile ring is ready for an implantation into an acceptor site and fixation with a dental implant.

### Example 3. A ring seeded with cells

Cells are isolated from fragments of recipient's adipose tissue. For cells isolation a tissue fragment of a volume of min 20 ml to 40 ml is required. The tissue is mechanically purified to remove all kinds of tissues other than adipose and grinded to fragments of 2 mm. Tissue fragments are then washed at least 3x in PBS solution (product of Life Technologies) and then enzymatically digested in a collagenase solution (product of Life Technologies) in a concentration of 400 U/ml = 0.15%. The volume ratio of the amount of adipose tissue to collagenase should remain 1:1. Such prepared solution should be incubated in 37°C for 4h with applied constant shaking of about 200 rpm. During this time adipose tissue is dissolved in collagenase. Having obtained possibly homogenous suspension, it is then centrifuged at 1500 rpm for 10 min then, the resultant supernatant is removed and remaining pellet is washed in a culture medium of a composition described in example II and centrifuged again at 1500 rpm for 5 min. Again, the resultant supernatant is removed and a pellet is suspended in a culture medium. Such an obtained mixture should be filtered through the nylon filter of a density of 100 µm. A filtrate comprising isolated cells is mixed with culture medium of the composition described in Example II and seeded into culture flasks (in the volume of about 15 ml) in the number of 1 million cells/ 1 flask. Sterile culture flasks manufactured by NUNC with the culture surface of 75 cm² are used. Cell culture is conducted in an incubator ensuring constant culture conditions, i.e., humidity of above 95%, temperature of 37°C and presence of 5% carbon dioxide. The culture medium is replaced with a fresh one every 3-4 days. Cell culture is continued until confluence - preferably 70- 80% confluence.

Then, cells are detached from the bottom of the flasks by means of trypsinization and subsequently are centrifuged at 1500 rpm for 10 min and counted in hemocytometer and resuspended in the adequate volume of a culture medium.

Ready to use, sterile (sterilized by means of radiation in the dose of 25 kGy) scaffold in the form of rings, prepared according to the description comprised in Example I and vented according to the procedure described in Example II, was seeded with cells isolated from adipose tissue and propagated during *in vitro* culture. The process of seeding scaffolds with cells is carried out in vacuum to ensure an even distribution of cells throughout the whole available surface of a ring.

Seeding method: vented scaffold in the form of a ceramic ring, prepared according to the procedures described in examples I and II, is transferred to a sterile 10 cm syringe. Cells detached from the culture surface are suspended in the culture medium- DMEM medium (Life Technologies) enriched with inactivated fetal bovine serum (FBS) in the concentration of 10%, supplemented with an antibiotic in the form of Antibiotic-Antimycotic preparation, L- glutamine in the concentration of 2 mM (Life Technologies) and vitamin C in the form of L-phospho-ascorbic acid in the concentration of 100µM (SIGMA) in an amount of 700.000 cells/ 2 ml medium. Prepared cells solution is withdrawn with a syringe containing the ring inside. The air contained in a syringe is removed, then, after closing a syringe a vacuum is created inside by delicate dragging and loosing a piston. Such an activity is repeated 3 to 5 times. The scaffold seeded in such a manner is placed inside of a well of 24- well plate and covered with a volume of cells suspension that remained in the syringe. Such prepared scaffolds are transferred to an incubator ensuring constant culture conditions i.e. the humidity of above 95%, temperature of 37°C and the presence of 5% carbon dioxide. After 24 hours, the culture medium is replaced with the fresh portion of a culture medium of the same composition in order to remove cells that do not adhere to scaffold and a scaffold itself is transferred into a new well within the culture plate. The cell culture on such a prepared scaffold is carried out for another 7 days in standard culture conditions, in an incubator with the constant humidity of above 95%, temperature of 37°C and in the presence of 5% carbon dioxide. After that time, scaffold is washed at least 3x for 5 min in a culture medium without FBS. Such a prepared scaffold/ring is ready for an implantation into an acceptor site and fixation by a dental implant.

To ensure the quality control of the prepared graft, each time 2 additional scaffolds/rings seeded with cells are prepared. These scaffolds are used to assess viability of the cells cultured in applied conditions. Simultaneously, the cytocompatibility of the material used to prepare a ring is assessed. To evaluate cells viability, the XTT test (product of SIGMA)- measuring an activity of cellular mitochondrial dehydrogenase and live/dead type fluorescence staining- staining with fluorescein and propidium iodide reagents (products of Life Technologies) are performed enabling determination and comparison of the quantity of living and dead cells attached to the scaffold at the time of implantation. The biocompatibility of the material/ ring was stated if the viability of cells cultured thereon quantified by XTT test was min. 70% when compared to the control cells. Controls are the cells cultured on the bottom of a culture plate in the same conditions as cells cultured on scaffolds.

### Example 4. Performance verification for the products described in examples II and III carried out by means of an observation after implantation into experimental animals tissues.

The rings seeded with cells and cultured in *in vitro* conditions were observed in the tissues of experimental animals (the description for the rings preparation method is comprised in example II and III). The rings were transplanted into the mandible of a small Göttingen minipig. Each implantation was carried out in an autogenic system. Two rings were transplanted into each animal: one seeded with cells according to the description comprised in example III and second non-seeded and prepared according to the description comprised in example II. Individual rings were implanted on the right and left side of a mandible in parallel. The observation in *in vivo* condition was carried out for 6 weeks. After that period of time, animals were euthanized and implanted rings together with a surrounding new tissue and a portion of mandible were excised.

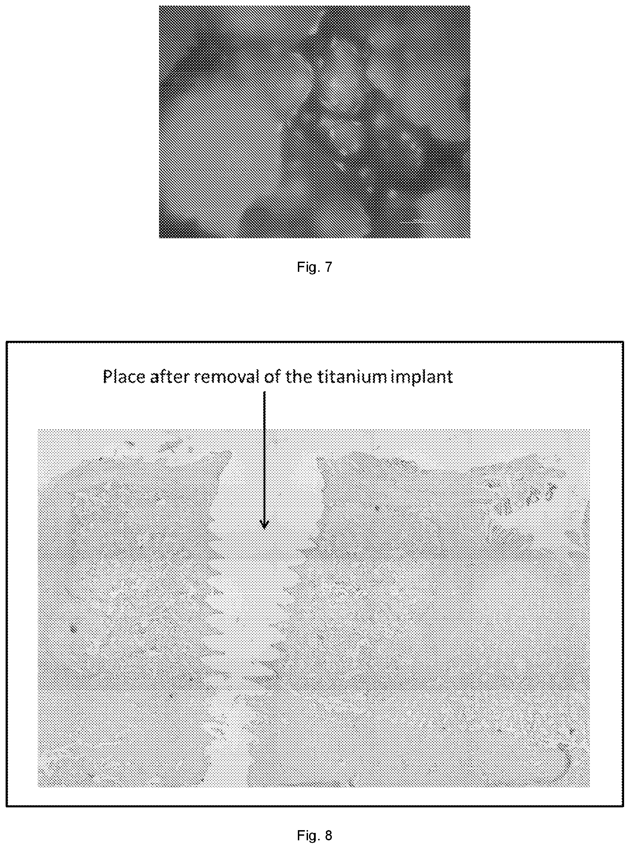

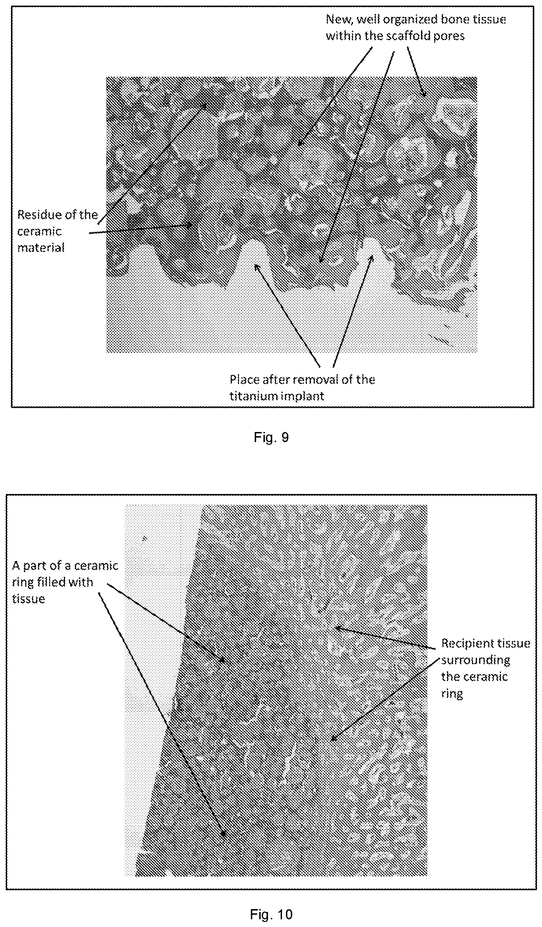

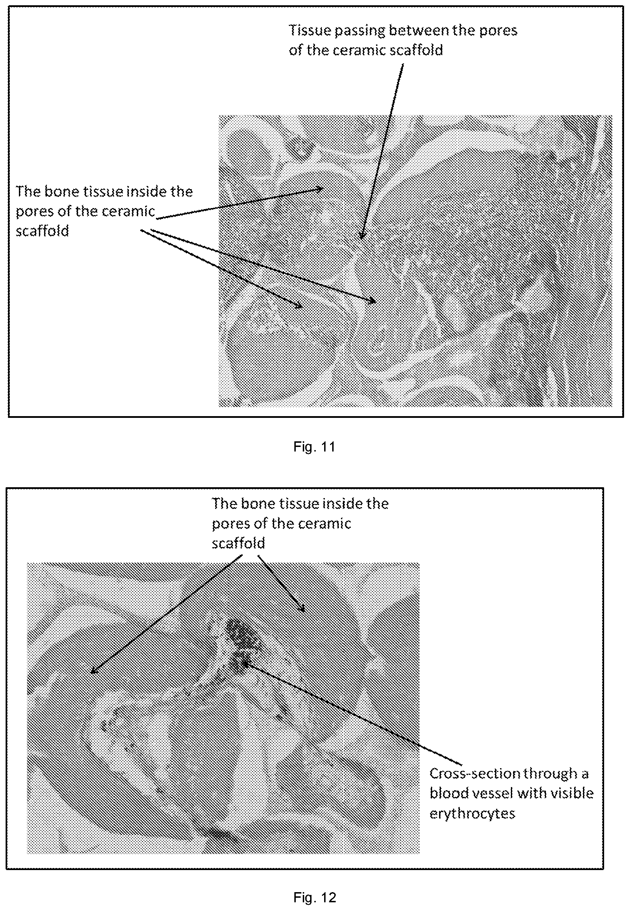

Macroscopically no difference between seeded and non- seeded rings was noted. All rings were overgrown and grown through with tissue and stably embedded in a mandible bone (the mean implant stability was about 70 ISQ). After *in vivo* culture neither connective tissue capsule around rings nor macroscopic inflammation marks were observed. The excised rings were transferred into 10% buffered formalin solution (product of SIGMA). The prepared histological sections of the tested product after *in vivo* observation reveal the presence of well vasculated and organized connective and bone tissue (HE staining) that fill pores of both type materials (Fig. 8 to 12). The collagen fibers that are luminescent in a polarized light were visualized with Sirius red. The observations carried out by light microscopy confirm that the rings according to the invention serve their function and can be utilized to reconstruct vertical bone losses.

### Example 5. A ring prepared from calcium carbonate.

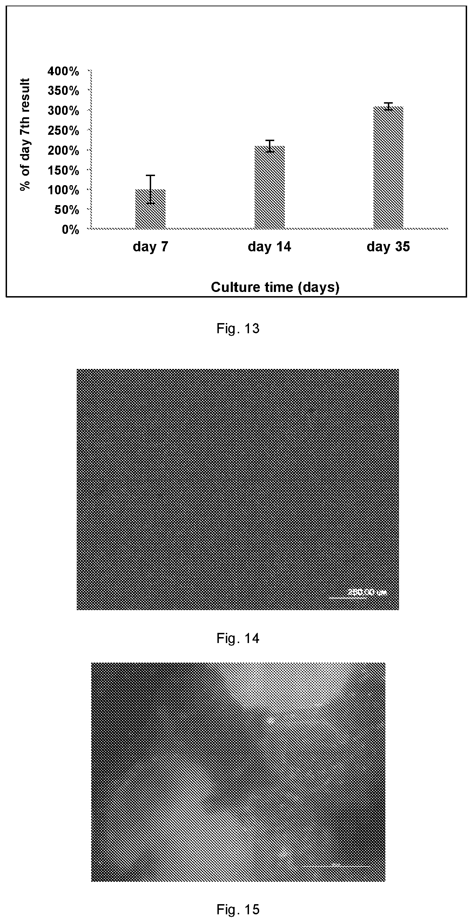

From a ceramic material made of calcium carbonate (CaCO₃) characterized with the calcite type crystal structure scaffolds in a shape of rings with the dimensions of: internal diameter 10 mm, outer diameter 3,2 mm, height 5 mm were prepared. The rings were characterized by the open porosity of 70-80% and the pores size of 200-500 µm; the compressive strength of the tested samples is about 0,7 MPa. The shape and technical parameters of the prepared samples suggested that the rings made of calcite might be utilized for prosthetic reconstruction. In further experiments rings were exposed to the culture medium of the following composition: DMEM medium (Life Technologies) enriched with an inactivated fetal bovine serum (FBS) in the concentration of 10%, supplemented with antibiotic in the form of an Antibiotic-Antimycotic preparation (product of Life Technologies, containing 10000 units of penicillin- in the form of sodium salt i.e. penicillin G, 10,000 ug streptomycin- in the form of streptomycin sulphate), L-glutamine in the concentration of 2 mM (Life Technologies). The rings were transferred into medium and incubated in the standard culture conditions i.e. the humidity of above 95%, temperature of 37°C and in the presence of 5% carbon dioxide. After incubation lasting up to 35 days none changes in the structure of the material were observed - its integrity was sustained, the external and internal dimensions were not altered. In the further experiments human osteogenic cells were seeded on calcite rings (the response of the commercially available cell line- MG-63 (ATTC) was also studied in the separate experiments) to carry out a culture in a contact with ceramic rings. Cultures were maintained in dynamic conditions for the period of 7 to 35 days. After this time, a test evaluating cells viability - MTT test assessing the activity of cellular mitochondrial dehydrogenase was performed. Tests results indicate high tolerability of cells on the used biomaterial (Fig. 13). Additionally, the possibility for an even distribution of living cells on the entire available culture surface of calcite biomaterial was confirmed (Fig. 14 and 15).

### Example 6 comparative.

### Introduction. Selection of the material suitable for a ring preparation.

During the conducted research work a number of types of cytocompatible materials were tested against osteogenic cells, such materials potentially could be utilized to prepare a ring designated to regenerate losses within mandible or jaw.

As a result of the conducted *in vitro* and *in vivo* experiments, it has been recognized that in order to prepare rings according to the invention only cytocompatible material with the open porosity of 70 to 80%, pore size in the range from 200 µm to 800 µm, preferably from 200 µm to 500 µm and the size of junctions between pores not smaller than 100 µm can be used.

According to the invention, its compressive strength is comparable to the compressive strength of a dried human cancellous bone, namely from 0,2 to 0,7 MPa, preferably, it should be about 0,7 MPa.

It is also desired that the material utilized to prepare the ring according to the invention is biodegradable, however, its degradation should not occur too rapidly and the aforementioned mechanical parameters should be sustained for at least the period of 30 days from the day of ring transplantation.

Additionally, it is desired that the material the ring is made of is hydrophilic. This feature ensures better absorption of the active substances from blood, which improves ring healing and bone tissue reconstruction as well as it facilitates cells seeding.

Moreover, it is desired that the ring is characterized by the microporosity and grittiness of a surface.

The ring should be characterized by the ease of surgical convenience that should be understood such that despite its fragility typical for ceramic materials, it preserves its shape and does not crush while handling during the stage of the preparation for an implantation and the implantation itself.

In case of the ring designated to be seeded with osteogenic cells (as in Example 3) the material that the ring is made of should be a suitable culture surface for the osteogenic cells in culture. According to the invention, a material meets such criteria if cells survival on the surface made of a material identical in terms of chemical composition, in a form enabling to culture cells in the conditions comparable to a routine cell culture on the standard culture plates (polystyrene) is not statistically significantly lower than in such a routine culture. During work undertaken to obtain the invention, it was surprisingly founded that statistically significantly lower survival in the plate culture conditions is correlated with survival on the three-dimensional ring structure, and disadvantageous influence of a material that is observed in a plate culture is surprisingly potentiated in the three-dimensional structure. This effect is presented in Fig. 21. Selected examples describing unsuccessful embodiments of a ring prepared from materials that did not meet the criteria of the invention are presented below.

### Chitosan rings

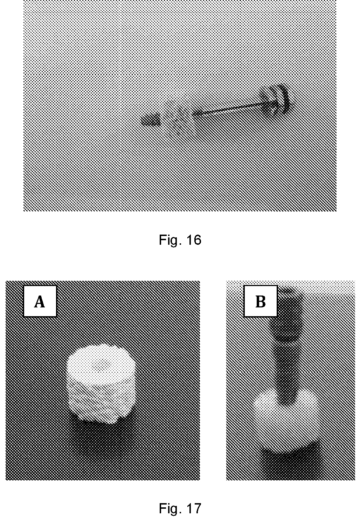

During the performed preliminary studies and an identification of the biomaterial suitable to reconstruct existing bone losses within a jaw or mandible rings made of chitosan were prepared. Chitosan is a polymer of natural origin. An elementary unit of a polymer chain is β (1-4) 2- amino-2-deoxy-D-glucose (or D-glucosamin). It is a material belonging to the resorbable polymers group that is being utilized in a production of various medical products. Accordingly, porous chitosan scaffolds of a ring shape and selected internal and external dimensions were prepared. Scaffolds were formed by the extrusion of the previously prepared chitosan granules carried out in an adequate form. The advantage of the obtained scaffolds is their high compressive strength and high biocompatibility. It was suspected that such properties of a material would ensure a suitable supporting construction for cells as well as future bone tissue reconstruction after sample implantation into an acceptor site. Cells were seeded on the prepared scaffolds and subjected to culture in standard experimental conditions. Additional studies on scaffold characteristics were performed in parallel. Based on the obtained results, it was stated that rings prepared by the described method were characterized by a low porosity and a small diameter of junctions between the pores (Fig. 17, 18 and 19). Results of the cells observations also confirmed that the architecture of the scaffold disables even cells distribution on the sample surface. Accordingly, such scaffold cannot be utilized in clinic because pores size disables blood vessels to invade the scaffold and therefore tissue nutrition.

Within additional experiments attempts for the modification of the chitosan rings preparation were undertaken, however, such attempts did not result in a significant improvement of the scaffolds architecture.

### Porous ring prepared from lactic and glycolic acid copolymer

The rings were prepared in a following manner: the mixture of polymers PDLLA-PLGA and PLLA is dissolved in 1,4-dioxan and porogen (NaCI) with the granule size of 250- 500 µm in the amount of 270 mg per sample is added. Then the mixture is frozen in the liquid nitrogen and freeze-dried for a minimum of 10 days. After freeze- drying, samples are pressed in forms under vacuum. Then NaCl is washed out from samples and the samples of scaffolds are dried in air for 24 hours following by vacuum drying. Due to such a procedure the material of a desired porosity and pore size was obtained.

Following seeding with cells rings are maintained in cell culture conditions i.e. in the culture medium analogous to the medium in an example presented in present application. Cells well tolerate the culture surface material and divide intensively in the culture, which proves the cytocompatibility of such a biomaterial.

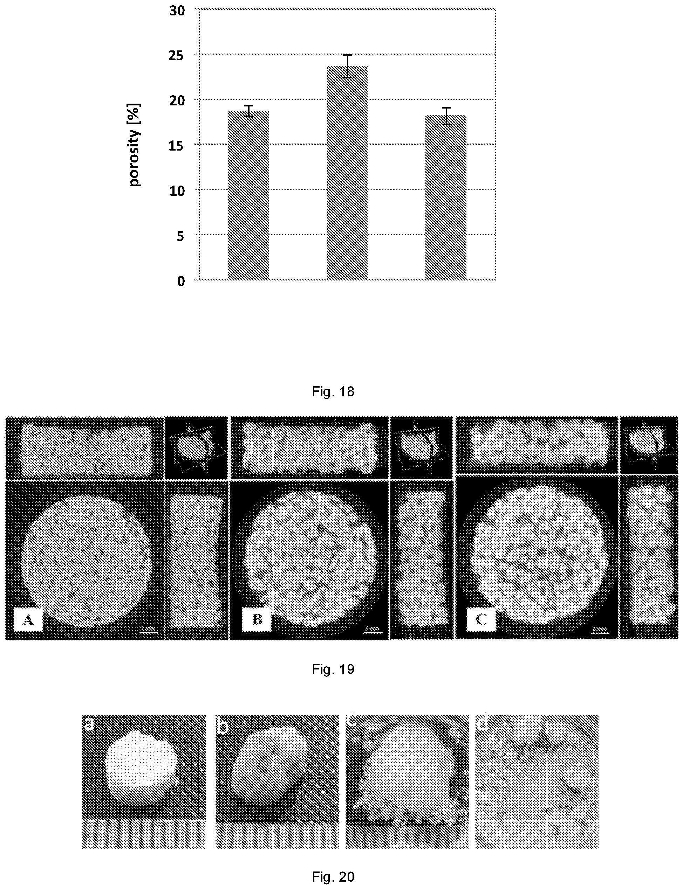

In a continuous culture occurs macroscopically and microscopically visible material degradation such that eventually in *in vitro* condition (still outside the body system, before implantation to tissues) a product with complete scaffold disintegration is obtained. It is shown in Figure 20.

Such a disintegrated product does not meet the criteria that are stated for rings for augmentation despite the fact that the criteria regarding scaffold porosity and material cytocompatibility were met. Therefore, according to the invention it is required that the material a ring is made of was characterized by the stability in aqueous and biologically active environment lasting at least 30 days.

## Claims

1. A dental ring for a regeneration of a bone surface and a reconstruction of a bone tissue in vertical dimension, with the possibility of a simultaneous introduction of the intraosseus dental implants, wherein the ring dimensions are: height (h) from 3 mm to 6 mm, outer diameter (y) from 6,8 to 12 mm, internal diameter (x) from 2.8 to 6,0 mm and the thickness of a wall (z) from 2 mm to 4 mm
and it is prepared from the biodegradable and cytocompatible porous material with the open porosity from 70 to 85%, pores size in the range from 200 µm to 800 µm, preferably from 200 µm to 500 µm and the size of junctions between pores not smaller than 100 µm, **characterised in that** its compressive strength is from 0,2 to 0,7 MPa, preferably about 0,7 MPa.

2. A dental ring according to claim 1 wherein it was additionally saturated with a culture medium, particularly a medium for stem cells isolated from tissues of an adult donor.

3. A dental ring according to claim 1 wherein it was additionally seeded with cells, particularly stem cells isolated from tissues of an adult donor, preferably in an autogenic system.

4. A dental ring according to claim 1 wherein it was prepared from a material being a suitable surface for osteogenic cells in a culture.

5. A dental ring according to claim 1 wherein it was prepared from the porous material consisting of 60% of hydroxyapatite and 40% of beta tricalcium phosphate.

6. A dental ring according to claim 1 wherein it was prepared from the porous material consisting of calcium carbonate in the crystal structure of a calcite type.

7. Dental kit wherein it consists of the ring as described in claims 1-6 and the fitted dental implant.

## Patentansprüche

1. Dentalring für eine Regeneration einer Oberfläche eines Knochen und einer Rekonstruktion eines Knochengewebes in einer vertikalen Dimension, mit der Möglichkeit der gleichzeitigen Einführung der intraossären Dentalimplantate, wobei die Dimensionen des Ringes sind: Höhe (h) von 3 mm bis 6 mm, äußerer Durchmesser (y) von 6,8 bis 12 mm, innerer Durchmesser (x) von 2,8 bis 6,0 mm und die Dicke einer Wand (z) von 2 mm bis 4 mm
und aus dem bioabbaubaren und cytokompatiblen porösen Material hergestellt ist mit der offenen Porosität von 70 bis 85%, einer Porengröße im Bereich von 200 µm bis 800 µm, bevorzugt von 200 µm bis 500 µm und der Größe von Brücken zwischen Poren von nicht kleiner als 100 µm, **dadurch gekennzeichnet, dass** seine Druckfestigkeit von 0,2 bis 0,7 MPa beträgt, bevorzugt ungefähr 0,7 MPa.

2. Dentalring nach Anspruch 1, wobei dieser zusätzlich mit einem Kulturmedium gesättigt wurde, insbesondere einem Medium für Stammzellen isoliert von Geweben eines erwachsenen Spenders.

3. Dentalring nach Anspruch 1, wobei dieser zusätzlich mit Zellen angesät wurde, insbesondere Stammzellen isoliert von Geweben eines erwachsenen Spenders, bevorzugt in einem autogenen System.

4. Dentalring nach Anspruch 1, wobei dieser aus einem Material hergestellt wurde, das eine geeignete Oberfläche für osteogene Zellen in einer Kultur ist.

5. Dentalring nach Anspruch 1 wobei dieser aus dem porösen Material bestehend aus 60% Hydroxyapatit und 40% beta-Tricalciumphosphat hergestellt wurde.

6. Dentalring nach Anspruch 1 wobei dieser aus dem porösen Material bestehend aus Calciumkarbonat in der Kristallstruktur eines Calcit-Typs hergestellt wurde.

7. Dentalkit das aus dem Ring wie beschrieben in den Ansprüchen 1-6 und dem angepassten Dentalimplant besteht.

## Revendications

1. Bague dentaire pour une régénération d'une surface osseuse et une reconstruction d'un tissu osseux dans une dimension verticale, avec la possibilité d'une introduction simultanée des implants dentaires intraosseux, dans laquelle les dimensions de la bague sont : hauteur (h) de 3 mm à 6 mm, diamètre extérieur (y) de 6,8 à 12 mm, diamètre interne (x) de 2,8 à 6,0 mm et l'épaisseur d'une paroi (z) de 2 mm à 4 mm
et elle est préparée à partir du matériau poreux biodégradable et cytocompatible avec la porosité ouverte de 70 à 85 %, une taille de pores dans la plage de 200 µm à 800 µm, de préférence de 200 µm à 500 µm et la taille des jonctions entre les pores non inférieure à 100 µm,
**caractérisée en ce que** sa résistance à la compression est de 0,2 à 0,7 MPa, de préférence d'environ 0,7 MPa.

2. Bague dentaire selon la revendication 1 dans laquelle elle a additionnellement été saturée avec un milieu de culture, en particulier un milieu pour les cellules souches isolées de tissus d'un donneur adulte.

3. Bague dentaire selon la revendication 1 dans laquelle elle a additionnellement été ensemencée avec des cellules, en particulier des cellules souches isolées de tissus d'un donneur adulte, de préférence dans un système autogène.

4. Bague dentaire selon la revendication 1 dans laquelle elle a été préparée à partir d'un matériau étant une surface appropriée pour des cellules ostéogènes dans une culture.

5. Bague dentaire selon la revendication 1 dans laquelle elle a été préparée à partir du matériau poreux constitué de 60 % d'hydroxyapatite et 40 % de phosphate tricalcique bêta.

6. Bague dentaire selon la revendication 1 dans laquelle elle a été préparée à partir du matériau poreux constitué de carbonate de calcium dans la structure cristalline d'un type de calcite.

7. Kit dentaire dans lequel il est constitué de la bague selon les revendications 1 à 6 et de l'implant dentaire ajusté.
